# EUROPEAN PATENT APPLICATION

(11) **EP 2 939 949 A1**
(43) Date of publication of application: **04.11.2015**
(21) Application number: 13867815.6
(22) Date of filing: 20.11.2013
(51) Int. Cl.: B65D 71/70, B65D 71/52, B65D 69/00

(54) **FUNCTIONAL CARRIER FOR TAKEOUT CUP**

(30) Priority: 31.12.2012 KR 20120158153; 10.04.2013 KR 20130038916; 07.06.2013 KR 20130065252
(71) Applicant: Song, Ha Kyun, Seoul 137-072 (KR)
(72) Inventor: Song, Ha Kyun, Seoul 137-072 (KR)
(74) Representative: Dr. Weitzel & Partner
(86) International application number: PCT/KR2013/010581
(87) International publication number: WO 2014/104581

(57) **Abstract**

Disclosed is a functional take-out cup carrier which is easily assembled when two or more disposable beverage cups for take-out are moved or delivered to an office, the home and the like and support the cups to present the cups from easily falling after use. The functional take-out cup carrier includes an upper support bracket including support surfaces to support the edge surfaces of two or more cups so as to support the two or more cups and a through hole formed at the center thereof, and a carrying handle including insertion protrusions formed at the upper and lower portions thereof so as to be connected to the through hole of the upper support bracket and configured to carry the cups. The functional take-out cup carrier is conveniently assembled and carried and allows disposable cups to be reused, thereby preventing environmental pollution and reducing costs and thus promoting public interest.

## Description

### [Technical Field]

The present invention relates to a functional take-out cup carrier which may be easily assembled when beverage cups for take-out are moved or delivered to an office, the home and the like and, particularly, prevent a plurality of cups from easily falling and assist the cups to be used as various containers when reused.

### [Background Art]

Recently, disposable cups for takeout have been launched so that individuals may drink black coffee, coffee with cream, and various teas or beverages according to their tastes. Further, users of disposable cups have tremendously increased in number.

Thus, disposable cups having various designs have been launched but, as tools to carry disposable cups, only paper boxes and vinyl bags having a simple structure are used now.

Further, if a disposable cup is disposed after use, environmental pollution is caused and treatment costs occur and, if the disposable cup is re-treated, environmental pollution is also caused.

Conventionally, if two or more beverage bottles are carried, the beverage bottles in a vinyl bag may collide with each other and thus break, and, if a person carries beverage bottles by hand, it is difficult for the person to handle more than two beverage bottles. Further, the vinyl bag may cause environmental pollution.

In order to solve such problems, Korean Patent Laid-open Publication No. 10-2008-0045474 discloses a transportation box of containers containing contents, such as cups or bottles, which is formed by bonding opposite bonding parts of unit structures, each of which has a bonding part extending from one side surface of a bottom part, a rear surface part extending from the other side surface of the bottom part, an upper surface part extending from the rear surface part, and another bonding part extending from the upper surface part so that the two bonding parts of the unit structure are bonded, but such a transportation box causes increase in the amount of trash and a difficulty in reuse of disposable cups (due to coupling tools between the cups).

### [Disclosure]

### [Technical Problem]

Therefore, the present invention has been made in view of the above problems, and it is an object of the present invention to provide a carrier to carry a plurality of coffee cups when the cups of coffee are purchased in a coffee shop.

It is another object of the present invention to provide a functional take-out cup carrier which solves problems caused by tearing of paper boxes or a difficulty in assembly of paper boxes and, thus, is not easily damaged and is easily assembled.

It is yet another object of the present invention to provide a cup carrier which allows disposable cups with lids to be reused so as to prevent environmental pollution and reuses eco-friendly disposable cups reusable as flowerpots, pencil holders, pin boxes or seasoning boxes through a support bracket.

### [Technical Solution]

In accordance with an aspect of the present invention, the above and other objects can be accomplished by the provision of a functional take-out cup carrier including an upper support bracket including support surfaces to support the edge surfaces of two or more cups so as to support the two or more cups and a through hole formed at the center thereof, a wing support bracket including guide wings to support the side surfaces of the two or more cups and a through hole formed at the center thereof, and a carrying handle including insertion protrusions formed at the upper and lower portions thereof so as to be connected to the through holes of the upper support bracket and the wing support bracket and configured to carry the cups.

### [Advantageous Effects]

A functional take-out cup carrier in accordance with the present invention is conveniently assembled and carries two or more cups for take-out.

Conventionally, when several cups of coffee are purchased in a coffee shop, several coffee cup carriers are used and such carriers are disposed after use. However, in order to solve such a problem, the functional take-out cup carrier in accordance with the present invention is assembled to support a plurality of coffee cups so as to prevent the coffee cups from falling and allows the cups to be reused for various purposes as flowerpots, pencil holders and pin boxes, thereby preventing environmental pollution and reducing costs and thus promoting public interest.

Particularly, the functional take-out cup carrier in accordance with the present invention supports a plurality of cups and exhibits excellent aesthetic sense when the cups are used as flowerpots, thus contributing to creation of an environment in an office, a school and the home.

### [Description of Drawings]

The above and other objects, features and other advantages of the present invention will be more clearly understood from the following detailed description taken in conjunction with the accompanying drawings, in which:
FIG. 1 is an exploded perspective view illustrating a functional take-out cup carrier in accordance with an embodiment of the present invention;
FIG. 2 is a perspective view of the functional take-out cup carrier in use in accordance with the embodiment of the present invention;
FIG. 3 is a plan view of the functional take-out cup carrier in use in accordance with the embodiment of the present invention;
FIG. 4 is a perspective view of a functional take-out cup carrier in accordance with another embodiment of the present invention;
FIG. 5 is a perspective view of the functional take-out cup carrier in accordance with the present invention when it is reused;
FIG. 6 is an exploded perspective view of a functional take-out cup carrier to receive three cups in accordance with another embodiment of the present invention;
FIG. 7 is a perspective view of an upper support bracket to receive three cups in accordance with the embodiment of the present invention;
FIGs. 8 and 9 are cross-sectional views of the upper support bracket;
FIG. 10 is a view of the functional take-out cup carrier used as flowerpots and writing instrument holders;
FIG. 11 is an exploded perspective view of a functional take-out cup carrier to carry four cups in accordance with another embodiment of the present invention;
FIG. 12 is a view illustrating a state the functional take-out cup carrier in which cup rings are removed from an upper support bracket and then the cups are inserted into the upper support bracket so as to reuse the functional take-out cup carrier;
FIG. 13 is a view of a handle in use;
FIG. 14 is a perspective view of the handle provided with hanging hooks to carry two functional take-out cup carriers, each of which serves to carry two cups;
FIG. 15 is a perspective view of an upper support bracket having a plurality of insertion holes;
FIG. 16 is a perspective view of a functional take-out cup carrier configured such that a basket may be fixed thereto;
FIG. 17 is a plan view illustrating an upper support bracket having a through hole formed at the center thereof and a through hole formed at a position separated from the center thereof so as to be selectively used according to the center of gravity when two cups are carried or when three cups are carried;
FIG. 18 is a view illustrating functional take-out cup carriers which are hung on a rack and used as flowerpots; and
FIGs. 19 and 20 are views illustrating connection of hanging hooks to installation holes formed at the edge of an upper support bracket to receive three cups.

### [Best Mode]

Hereinafter, a functional take-out cup carrier usable as a flowerpot in accordance with preferred embodiments of the present invention will be described in detail with reference to the annexed drawings.

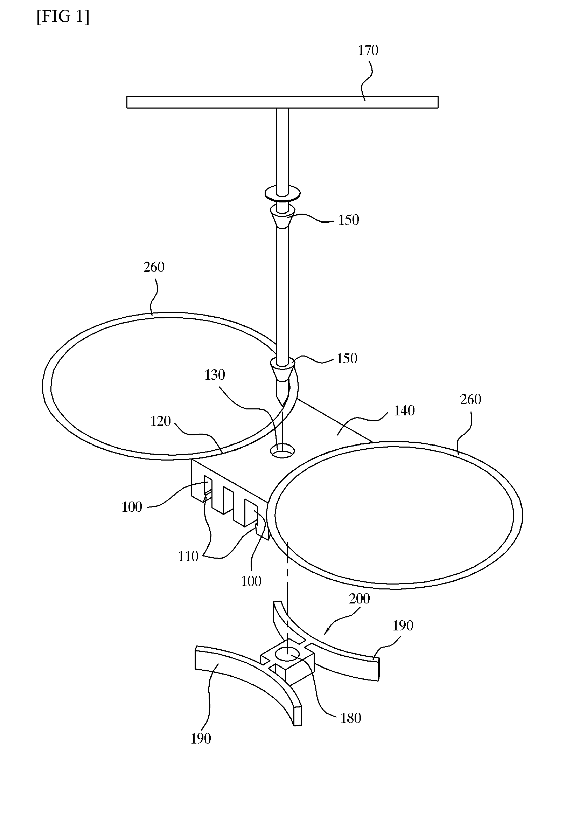

As exemplarily shown in FIGs. 1 to 20, the functional take-out cup carrier the present invention is configured to allow anyone to easily carry disposable take-out cups, to solve inconvenience in assembly of a cup box, and to support cups during transportation and reuse so as to exhibit the function thereof even in a rainy day or at a wet place.

First, the function of the functional take-out cup carrier in accordance with the present invention to easily carry disposable cups will be described.

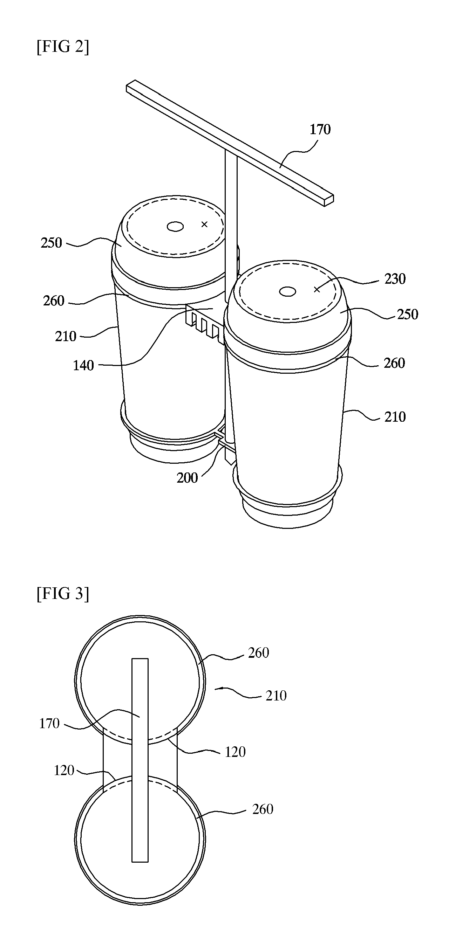

When two cups 210 are carried, as exemplarily shown in FIGs. 1 and 2, the functional take-out cup carrier of the present invention includes an upper support bracket 140 including support surfaces 120 to support the edge surfaces of the two cups 210 so as to support the two cups 210 and a through hole 130 formed through the center or insertion grooves formed on the side surfaces thereof, a wing support bracket 200 including guide wings 190 to support the side surfaces of the two cups 210 and a through hole 180 formed through the center thereof, and a carrying handle 170 including insertion protrusions 150 formed at the upper and lower portions thereof so as to be connected to the through holes 130 and 180 of the upper support bracket 140 and the wing support bracket 200. The cup 210 includes a lid 250 and a straw hole 230.

The upper support bracket 140 has the support surfaces 120 having an arc structure so as to support the edge surfaces of the cups 210, and cup rings 260 or bent legs 350 to support the cups 210 are formed at the ends of the support surfaces 120 on the upper surface of the upper support bracket 140 so as to support the loads of the cups 210. Further, the through hole 130 is formed at the center of the upper support bracket 140 so as to be connected to the through hole 180 of the wing support bracket 140. (Here, the bent leg refers to a structure, one surface of which is opened.)

In accordance with one embodiment of the present invention, the upper support bracket 140 may include one type selected from the bent legs 350 and the cup rings 260 as structures formed at the ends of the support surfaces 120 to support the cups 210.

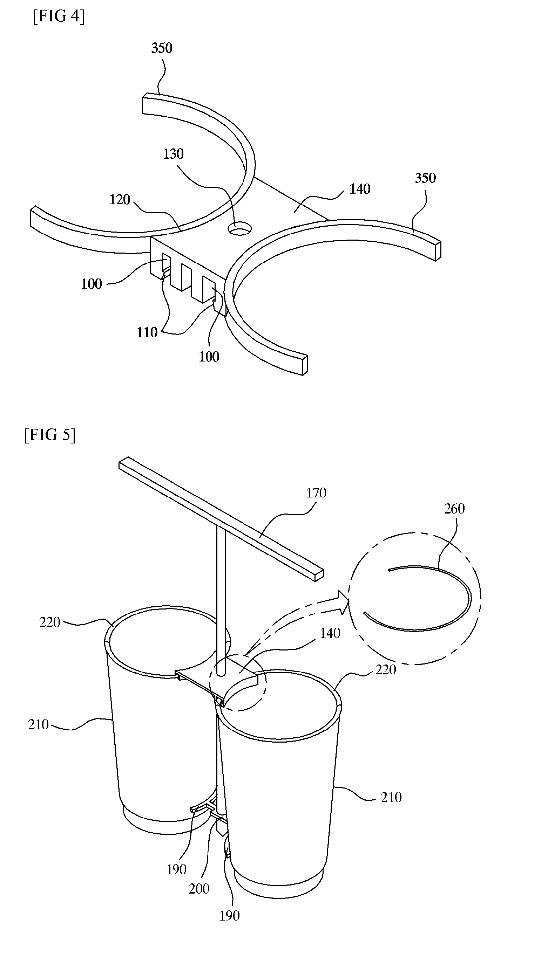

As exemplarily shown in FIG. 4, so as to reuse the cups 210 held by the functional take-out cup carrier of the present invention, insertion grooves 100 are formed on the lower surface of the upper support bracket 140 and protrusions 110 are formed on the inner surfaces of the insertion grooves 100 so as to prevent the cups 210 from being easily released from the insides of the insertion grooves 100. As exemplarily shown in FIG. 5, when reused, the cup rings 260 or the bent legs 350 are cut off from the upper support bracket 140. At this time, although the cup rings 260 or the bent legs 350 of the upper support bracket 140 may be used as they are, cutting parts may be provided to easily cut off the cup rings 260 or the bent legs 350 from the upper support bracket 140.

Therefore, after the edge surfaces of the cups 210 are inserted into the insertion grooves 100 so that the cups 210 do not fall or are not released from the insides of the insertion grooves 100, the cups 210 may be reused as flowerpots by putting soil into the cups 210 and then planting plants, or as writing instrument holders or storage containers.

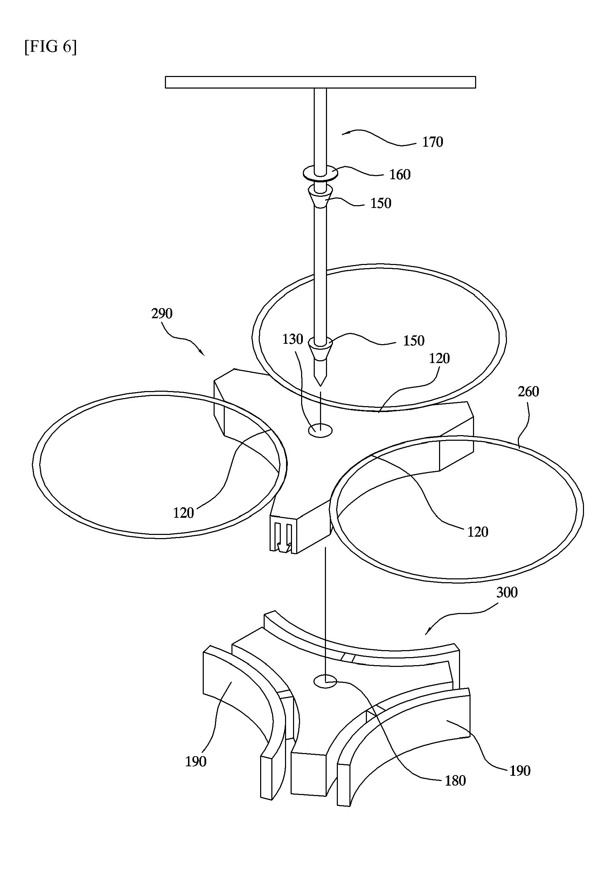

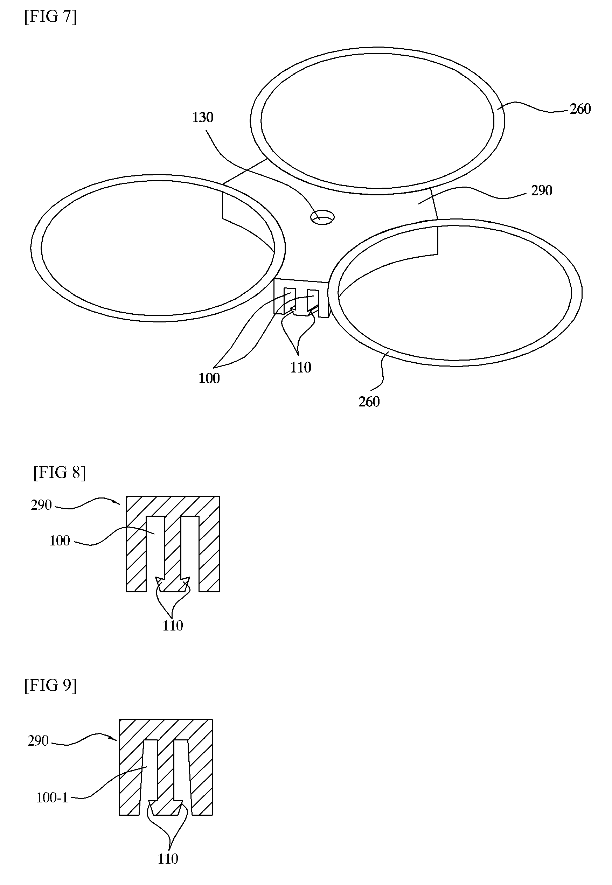

As exemplarily shown in FIGs. 6 and 7, a functional take-out cup carrier to carry or fix three cups in accordance with another embodiment of the present invention will be described below.

First, an upper three-surface support bracket 290 includes three support surfaces 120 to support three cups and a through hole 130 formed at the center thereof. Further, insertion grooves 100 are formed on the lower surface of the upper support bracket 140 and protrusions 110 are formed on the inner surfaces of the insertion grooves 100 so as to prevent the cups 210 from being easily released from the insides of the insertion grooves 100.

A three-surface wing support bracket 300 combined with the upper three-surface support bracket 290 includes guide wings 190 to support the three cups and a through hole 180 formed at the center thereof.

The above-described upper three-surface support bracket 290 and three-surface wing support bracket 300 are inserted into a carrying handle 170 so as to carry the three cups.

FIG. 8 is a cross-sectional view of the upper three-surface support bracket 290 in which the insertion grooves 100 and the protrusions 110 within the insertion grooves 100 are provided, and FIG. 9 is a cross-sectional view of the upper three-surface support bracket 290 in which inclined surfaces 100-1 are provided on the inner surfaces of the insertion grooves 100 and the protrusions 110 are provided within the insertion grooves 100 so as not to release the cups from the insertion grooves 100.

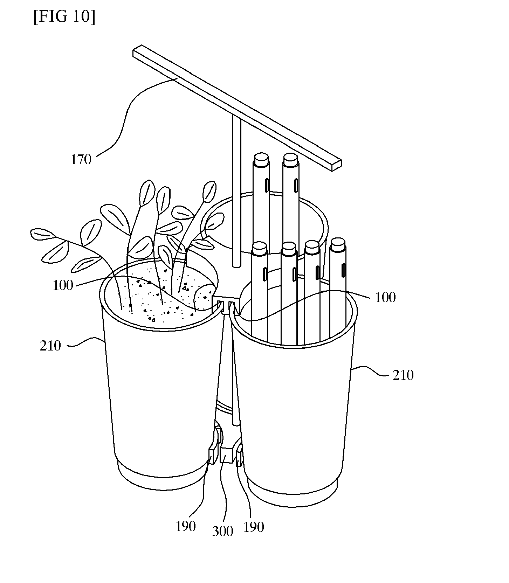

As exemplarily shown in FIG. 10, which is a view of the functional take-out cup carrier to fix three cups, the upper edge parts of the cups are inserted into the upper three-surface support bracket 290 so as not to be released from the upper three-surface support bracket 290 and, then, the cups may be reused.

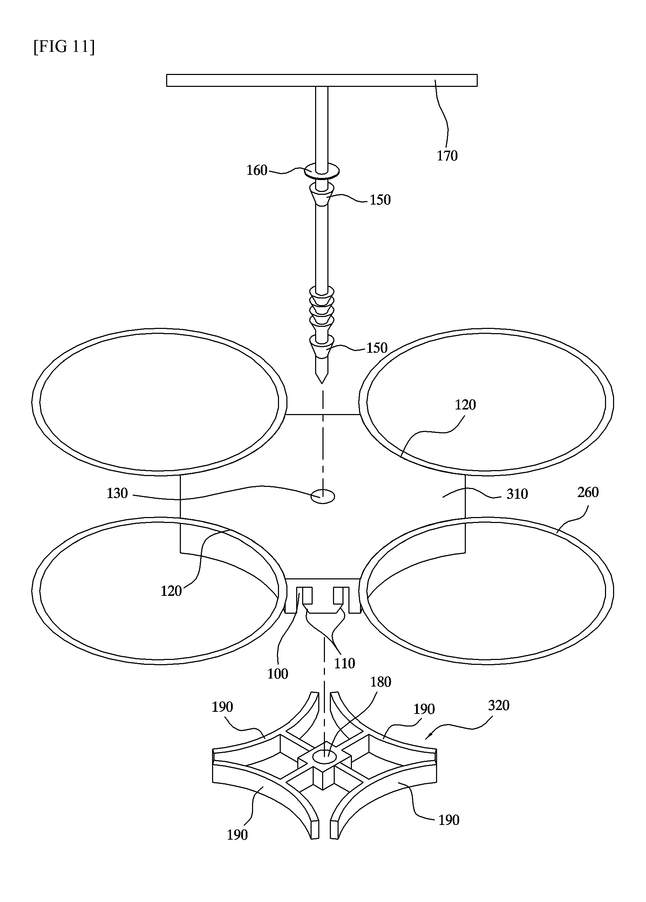

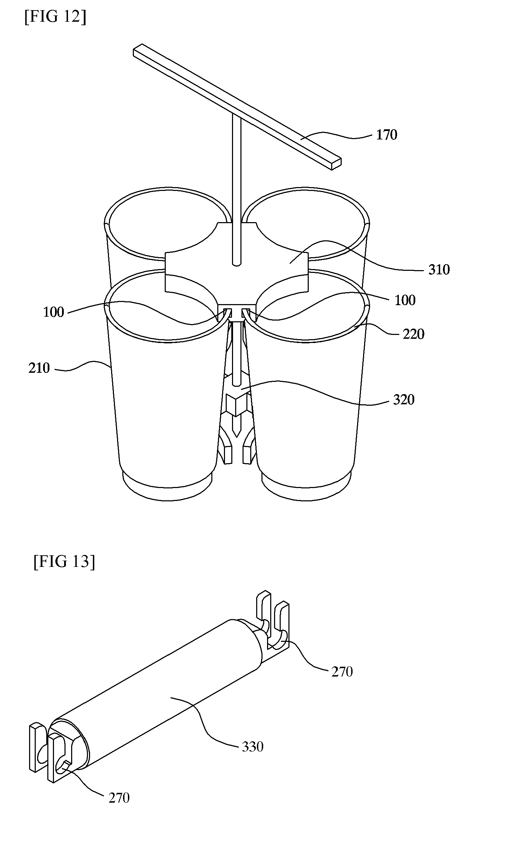

FIGs. 11 and 12 are views of a functional take-out cup carrier to carry and fix four cups in accordance with another embodiment of the present invention. First, as exemplarily shown in FIG. 11, the functional take-out cup carrier includes a carrying handle 170 including a plurality of insertion protrusions 150 and an upper plate 160 provided above the insertion protrusions 150, an upper four-surface support bracket 310 including four support surfaces 120 to support four cups and a through hole 130 formed at the center thereof, and a four-surface wing support bracket 320 combined with the upper four-surface support bracket 310 and including four guide wings 190 to support the side surfaces of the cups and a through hole 180 formed at the center thereof. In FIG. 11, cup rings 260 are provided such that the cups are hung on the cup rings 260.

The carrying handle 170 includes the plural insertion protrusions 150 so that the position of the four-surface wing support bracket 320 installed at the lower portion of the carrying handle 170 may be set to adjust the length between the upper four-surface support bracket 310 and the four-surface wing support bracket 320 according to cups.

As exemplarily shown in FIG. 12, the upper four-surface support bracket 310 and the four-surface wing support bracket 320 are combined using the carrying handle 170 so as to simultaneously carry four cups.

FIG. 12 is a view illustrating a state of the functional take-out cup carrier in which the cup rings 260 or bent legs are cut off from the upper four-surface support bracket 310 so as to reuse the four cups after the functional take-out cup carrier is used to carry the four cups.

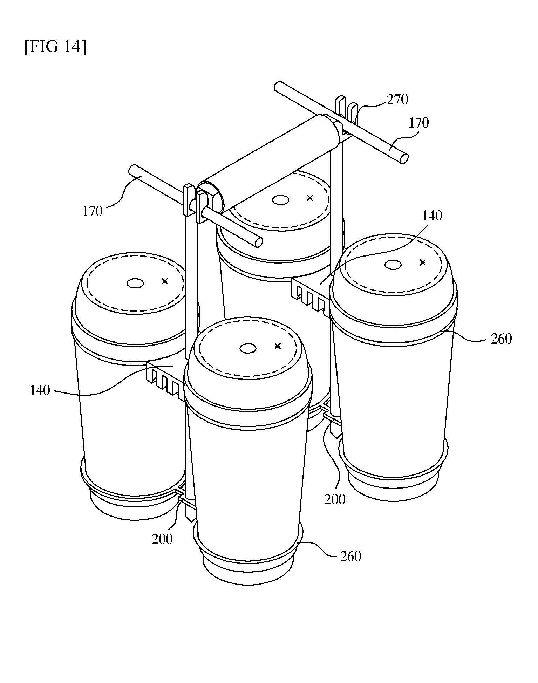

FIGs. 13 and 14 illustrate a handle 330 configured to easily or safely carry two or more cups. Hanging hooks 270 are formed at both sides of the handle 330 so that carrying handles 170 may be hung on the hanging hooks 270.

As exemplarily shown in FIG. 14, which is a view of the handle 330 in use, the hanging hooks 270 may be extracted from or retracted into the handle 330 so as to space the cups from each other, thus being capable of carrying a large number of cups of coffee. The carrying handles 170 may be hung on the hanging hooks 270 of the handle 330.

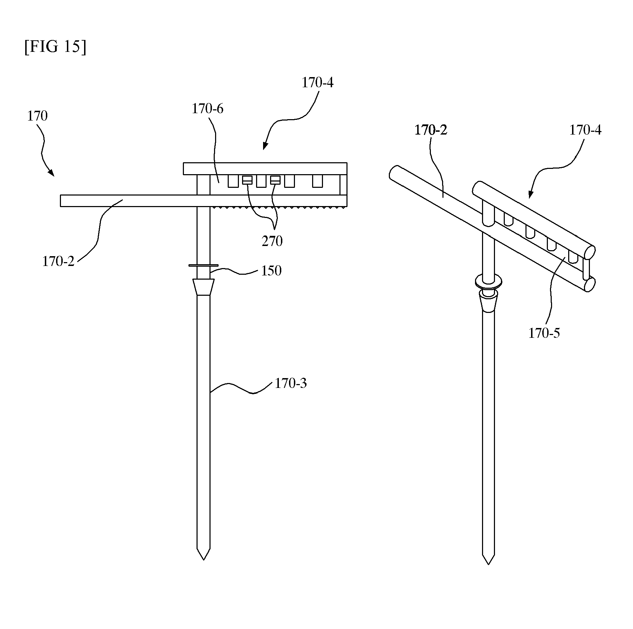

A functional take-out cup carrier in accordance with another embodiment of the present invention shown in FIGs. 15 to 18, including a cup support bracket including support surfaces to support edge surfaces of cups and cup rings 260, and a carrying handle to support the cup support bracket, is characterized in that a plurality of insertion holes 170-6 is formed on the upper surface or the lower surface of a horizontal supporter 170-2 of the carrying handle 170 so as to adjust the center of gravity of the carrier. The carrying handle 170 includes the horizontal supporter 170-2 and a vertical supporter 170-3 and an insertion protrusion 150 to fix the vertical supporter 170-3 inserted into a through hole of the cup support bracket is provided. The plural insertion holes 170-6 are formed on the upper surface or the lower surface of the vertical supporter 170-2 of the present invention so that a hanging hook of a handle may be inserted into the insertion holes 170-6.

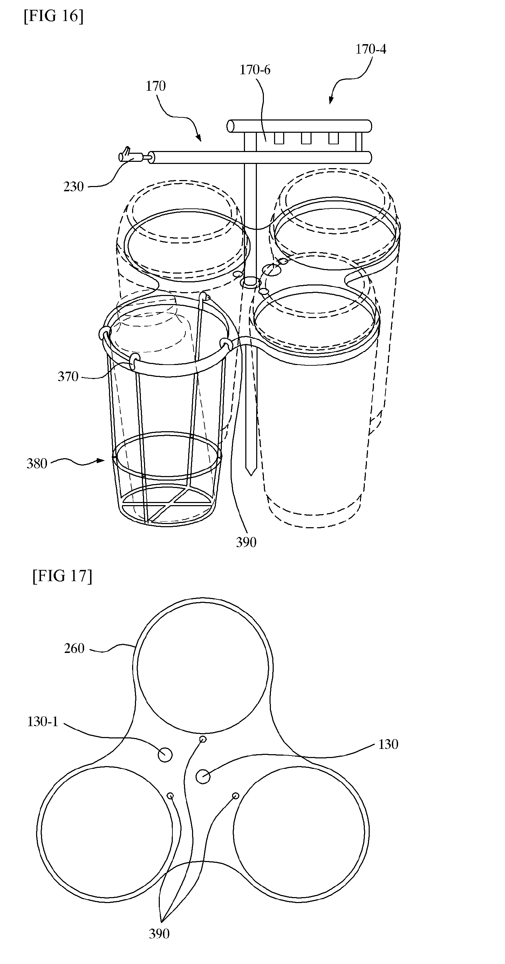

As exemplarily shown in FIGs. 15 and 16, a subsidiary supporter 170-4 is provided above the vertical supporter 170-2 of the present invention and the insertion holes 170-6 are formed between the subsidiary supporter 170-4 and the vertical supporter 170-2. A paper holder or spoon hanging rod 230 is formed at the end of the carrying handle 170 of FIG. 16. Further, a basket 380, instead of a cup, may be inserted into a cup ring and hanging hooks 390 of the basket 380 may be hung onto the cup ring so as to fix the basket 380 to the cup ring.

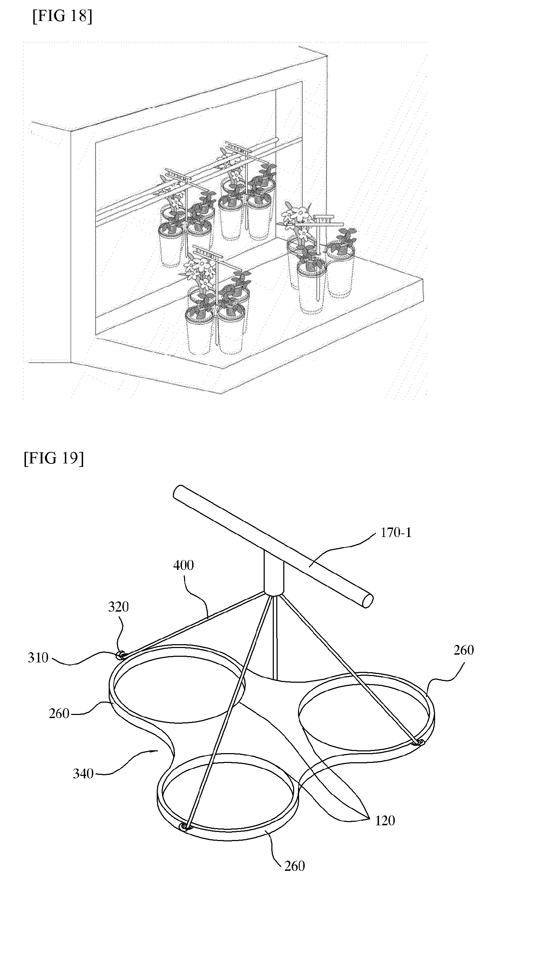

The hanging hook 270 of the handle 330 is inserted into the insertion hole 170-6 so that a plurality of cups may be conveniently carried. Here, the hanging hook 270 may be inserted into one selected from the plural insertion holes 170-6 which is suitable to adjust the center of gravity of the carrier. That is, when cups are carried, the hanging hook 270 is inserted into the insertion hole 170-6 corresponding to the position the center of gravity of the carrier so as to balance of weight of the carrier. As exemplarily shown in FIG. 17, installation holes 130 and 130-1 are formed at the center and at a designated position separated from the center of the upper support bracket to receive three or four cups and, thus, since the center of gravity of the carrier varies according to cups inserted into the cup rings, the carrying handle 170 may be inserted into one of the installation holes 130 and 130-1 according to the center of gravity of the carrier. FIG. 18 is a view illustrating functional take-out cup carriers conveniently hung on a rack hanger.

Subsidiary legs may be formed at the through hole of the upper support bracket of the present invention so that the upper support bracket may stand even if no cup is inserted into the upper support bracket.

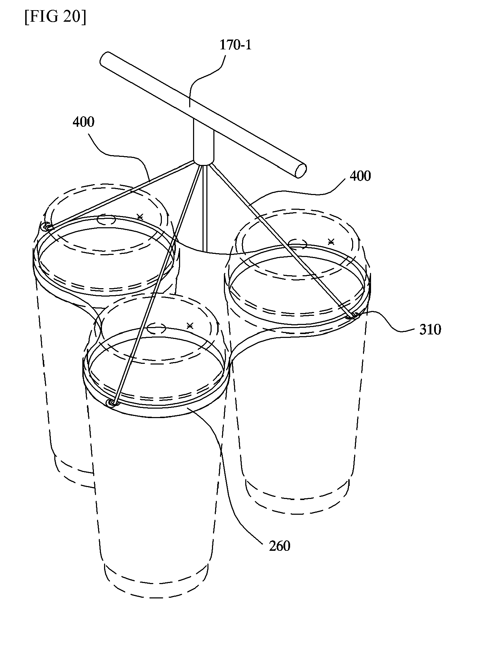

As exemplarily shown in FIGs. 19 and 20, a functional take-out cup carrier in accordance with another embodiment of the present invention includes an upper support bracket 340 including support surfaces 120 to support the edge surfaces of two or more take-out cups so as to support the cups and installation holes 310 formed at the ends of cup rings 260, and a carrying handle 170-1 including a plurality of hangers 400 provided with hanging hooks 320 hung on the installation holes 310 formed at the cup rings 260 of the upper support bracket 340. In more detail, the upper support bracket 340 is formed so as to carry three beverage cups. The upper support bracket 340 includes support surfaces to withstand the weight of the cups at both sides thereof and the cup rings 260 to support the cups. The upper support bracket 340 is configured to fix or support the cups in such a manner, the installation holes 310 are formed at the side surfaces of the cup rings 260 so as to be easily hung on the hanging hooks 320 and, thus, the upper support bracket 340 may be carried using the carrying handle 170-1. The carrying handle 170-1 includes a plurality of hangers 400 with the hanging hooks 320 formed at the terminals thereof so as to carry two, three or four cups. The hangers 400 may have a length sufficient to conveniently carry a plurality of cups.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A functional take-out cup carrier comprising:
an upper support bracket including support surfaces to support the edge surfaces of two or more cups so as to support the two or more cups and a through hole formed at the center thereof or a through hole formed at a designated position separated from the center; and
a carrying handle including insertion protrusions formed at the upper portion thereof to be connected to the through hole of the upper support bracket and configured to carry the cups.

2. The functional take-out cup carrier according to claim 1, comprising an upper support bracket including support surfaces to support the edge surfaces of two or more cups so as to support the two or more cups and a through hole formed at the center thereof;
a wing support bracket including guide wings to support the side surfaces of the two or more cups and a through hole formed at the center thereof; and
a carrying handle including insertion protrusions formed at the upper and lower portions thereof so as to be connected to the through holes of the upper support bracket and the wing support bracket and configured to carry the cups.

3. The functional take-out cup carrier according to claim 1, wherein the upper support bracket includes three or four support surfaces to support three or four cups.

4. The functional take-out cup carrier according to claim 2, wherein the upper support bracket further includes insertion grooves formed on the upper or lower surface thereof and protrusions formed on the inner surfaces of the insertion grooves so that the edge surfaces of the two or more cups may be inserted into the insertion grooves.

5. The functional take-out cup carrier according to claim 1, wherein rings or bent legs are formed at the ends of the support surfaces of the upper support bracket.

6. The functional take-out cup carrier according to claim 2, wherein the wing support bracket include two guide wings, three guide wings or four guide wings.

7. The functional take-out cup carrier according to claim 1, wherein a plurality of insertion holes is formed on the upper surface or the lower surface of a horizontal supporter of the carrying handle so as to adjust the center of gravity of the carrier when the two or more cups are carried.

8. The functional take-out cup carrier according to claim 1, wherein a paper holder or spoon hanging rod is formed at the end of the carrying handle.

9. The functional take-out cup carrier according to claim 7, further comprising a handle including hanging hooks so as to connect the carrying handle and another carrying handle to each other.

10. A functional take-out cup carrier comprising:
an upper support bracket including support surfaces to support the edge surfaces of two or more take-out cups so as to support the cups and installation holes formed at the ends of cup rings; and
a carrying handle including a plurality of hangers provided with hanging hooks hung on the installation holes formed at the cup rings of the upper support bracket.

11. The functional take-out cup carrier according to claim 10 wherein a through hole is formed at the center of the upper support bracket and subsidiary legs are formed at the through hole of the upper support bracket.
